# FASCICULE DE BREVET EUROPEEN

(11) **EP 0 647 580 B1**
(45) Date de publication et mention de la délivrance du brevet: **03.12.1997**
(21) Numéro de dépôt: 94402023.9
(22) Date de dépôt: 12.09.1994
(51) Int. Cl.: B65G 51/06, G01T 7/08, B65D 77/04, B65D 51/00

(54) **Récipient à étui de transport dans un système de tubes pneumatiques**
Behälter mit Transporthülse in einer Rohrpostanlage
Container with transport case in a pneumatic tube conveyor

(30) Priorité: 14.09.1993 FR 9310916
(43) Date de publication de la demande: 12.04.1995
(73) Titulaire: COMPAGNIE GENERALE DES MATIERES NUCLEAIRES (COGEMA), 78141 Vélizy-Villacoublay (FR)
(72) Inventeur: Marchand, Robert, F-50120 Equeurdreville (FR); Herbreteau, Michel, F-50100 Cherbourg (FR); Besnier, Joseph, F-50440 Beaumont-Hague (FR)
(74) Mandataire: Ilgart, Jean-Christophe

(56) Documents cités:
- EP-A- 0 093 609
- WO-A-80/00371
- FR-A- 1 401 233
- US-A- 2 494 456

## Description

L'invention se rapporte à un récipient à étui de transport dans un conduit.

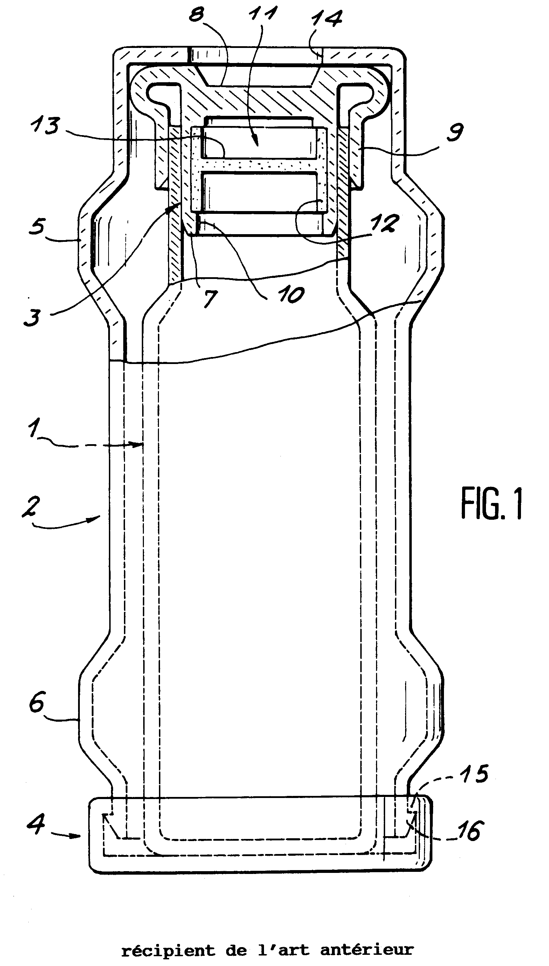

Les récipients dont il est ici question sont plus précisément destinés à contenir des produits dangereux tels que radioactifs et sont transportés par voie pneumatique dans des conduits entre des stations de remplissage, de prélèvement, d'analyse et de rejet des produits qui composent l'installation de mesure. Dans la réalisation connue jusqu'à présent, le récipient représenté à la figure 1, désigné par la référence 1 et appelé cruchon par la déposante, est destiné à contenir un produit a analyser et l'étui 2, appelé curseur, l'entoure. Le cruchon 1 est fermé par un bouchon 3 et le curseur 2, qui présente comme le cruchon une ouverture, est fermé par un capuchon 4. Le cruchon 1 est logé avec un jeu important dans le curseur 2. Le curseur 2 est muni de deux bourrelets annulaires 5 et 6 qui lui permettent de coulisser sans difficulté dans des canalisations pneumatiques ; le bouchon 3, en élastomère souple, est composé d'une lèvre intérieure 7 circulaire moulée sur la paroi d'ouverture du cruchon 1, d'une surface de piqûre 8 plane et destinée à être percée par des aiguilles de remplissage du cruchon 1 et de prélèvement d'échantillons du cruchon 1, et d'une jupe 9 qui est rabattue autour du bord d'ouverture du cruchon 1, dans la position représentée où le cruchon 1 et le curseur 2 sont fermés. La lèvre intérieure 7 est munie à son extrémité d'un renflement 10 qui permet de retenir contre la surface de piqûre 8 un ramasse-goutte 11 composé d'un anneau 12 serti dans la lèvre intérieure 7 et d'un clapet 13 parallèle à la surface de piqûre 8, et dont le rôle est, comme son nom l'indique, d'essuyer les aiguilles extraites du cruchon 1 en retenant la goutte de liquide qui pourrait y être suspendue. Avant d'être rabattue, la jupe 9 prolonge sensiblement la lèvre intérieure 7 à l'opposé de la surface de piqûre 8.

Le curseur 2 est muni d'un trou 14 devant la surface de piqûre 8 pour permettre aux aiguilles d'atteindre le cruchon 1. Quant au capuchon 4, il est en plastique souple et encliqueté grâce à un rebord interne 15 à son extrémité sur un renflement extérieur 16 de l'ouverture du curseur 2.

Cette conception est sujette à des inconvénients multiples qui réduisent considérablement son intérêt. Il est en particulier nécessaire d'effectuer les prélèvements ou les échantillonnages par des aiguilles, car il est impossible d'ouvrir temporairement le cruchon 1 en ôtant le bouchon 3 : la nocivité des produits transportés oblige à manipuler les cruchons 1 à distance, et les seuls outils dont on dispose dans l'installation existante sont des pinces qui peuvent retirer le bouchon 3 mais pas le remettre, car la jupe 9, qui reste rabattue, s'oppose à un nouvel enfoncement du bouchon 3 en frottant contre le bord du cruchon 1 et est trop souple pour qu'on puisse la redresser.

Les gouttelettes de liquide contaminant qui peuvent apparaître malgré le ramasse-goutte 11 quand l'aiguille sort de la surface de piqûre 8 coulent d'une part entre le cruchon 1 et le curseur 2 et les polluent irrémédiablement et d'autre part restent sur cette surface de piqûre 8 pour, en conséquence de mouvements imprimés à l'ensemble cruchon-curseur, polluer également l'installation de prélèvement, les conduits du réseau de transfert pneumatique ainsi que la station de l'installation où les cruchons 1 sont sortis des curseurs 2 pour être ouverts définitivement. Les cruchons 1 et les curseurs 2 doivent être conditionnés comme déchets dangereux à un coût très important, car l'infiltration du liquide au coeur de leurs parois, qu'on constate avec les matériaux plastiques qu'on emploie, empêche les décontaminations d'être efficaces.

Le capuchon 4 peut parfois se détacher dans les conduits et obliger à des démontages pour récupérer les éléments du système, avec des précautions très astreignantes pour maintenir le confinement des produits.

Les analyses sont effectuées en pratique sur plusieurs cruchons 1 à la fois. Les curseurs 2 sont repérés par un codage, mais qui devient inutilisable dès que les cruchons 1 sont extraits des curseurs 2, cette opération de séparation du cruchon 1 de son curseur 2 étant dictée par le type et les méthodes d'analyses utilisées : par exemple, les mesures d'absorption d'un rayonnement ou nécessitant que le contenu du cruchon 1 soit versé dans une cuve, après ouverture du bouchon 3. Il devient alors impossible d'apparier les cruchons 1 et les curseurs 2 correspondants et donc d'identifier les échantillons de manière certaine : un risque de confusion des échantillons apparaît.

Le cruchon 1, fabriqué par un procédé de soufflage dans un moule extérieur, a un diamètre intérieur qui varie fortement, ce qui compromet la précision des mesures telles que des mesures d'absorption accomplies à l'aide d'un rayon qui traverse le contenu du cruchon 1.

De plus, l'étanchéité entre le cruchon 1 et le bouchon 3 n'est pas très bonne et le vide qui est d'abord établi dans le cruchon 1 cesse peu à peu.

Enfin, les aiguilles de prélèvement arrachent souvent le ramasse-goutte 11 de son logement au lieu de le percer. La conséquence est que les prélèvements d'échantillons échouent.

De plus, le document FR-A-1401233 décrit un récipient similaire à celui dicuté ci-dessus.

L'invention est relative à un récipient composé comme le précédent d'un flacon ouvert (le cruchon) destiné à contenir un produit, d'un bouchon souple fermant le flacon par une lèvre circulaire se moulant sur l'ouverture du flacon et possédant une surface de piqûre devant l'ouverture du flacon, d'une enveloppe (le curseur) ouverte entourant le flacon, destinée à coulisser dans une canalisation de transport et d'un opercule fermant l'enveloppe, mais ce récipient est enrichi de divers perfectionnements.

Le perfectionnement le plus important consiste en ce que le bouchon est encastré en permanence dans l'opercule et l'opercule est vissé à l'enveloppe (et interrompu devant la surface de piqûre).

L'avantage est que l'ouverture du flacon est faite en une seule opération qui se prête parfaitement à l'automatisation par des dévisseuses commandées à distance.

De même, la fermeture peut être accomplie sans difficultés et autant de fois qu'on le souhaite car le bouchon est bien soutenu par l'opercule.

Il est encore avantageux que le flacon porte une collerette posée sur l'ouverture de l'enveloppe et fixée, par soudage, collage ou autrement, à l'enveloppe. Le flacon et l'enveloppe sont alors d'un seul tenant et leur intervalle est hermétiquement clos, de sorte qu'il ne peut pas être pollué.

On préconise aussi que l'opercule et soit le flacon, soit l'enveloppe portent un frein au dévissage de l'opercule afin d'éviter une situation analogue à l'arrachement du capuchon, qui serait encore plus gênante ici puisque le bouchon serait également retiré. Ces freins peuvent consister en une couronne dentée sur l'opercule et une autre couronne dentée sur le flacon ou l'enveloppe, dont les dents sont imbriquées avec celles de la précédente.

Si en outre le flacon est en plastique obtenu par moulage, ses dimensions peuvent être connues avec précision et son état de surface est suffisamment satisfaisant pour que l'étanchéité au vide soit parfaitement établie avec la lèvre intérieure du bouchon. Le ramasse-goutte peut être fermement maintenu dans le bouchon si la lèvre comporte un renflement extérieur au-delà du ramasse-goutte et qui provoque une contraction locale de la lèvre pour la refermer sur l'anneau du ramasse-goutte dès que ce renflement est engagé dans l'ouverture du flacon.

Enfin les suintements du liquide hors du flacon par la surface de piqûre peuvent être considérablement réduits si la surface de piqûre est d'une épaisseur supérieure au biseau de l'aiguille, pour éviter toute communication entre l'intérieur et l'extérieur du flacon au moment de la montée ou descente de l'aiguille.

On va maintenant décrire l'invention plus en détail à l'aide des figures suivantes annexées à titre illustratif et non limitatif :
- la figure 1 déjà décrite illustre un récipient de l'art antérieur,
- la figure 2 illustre un récipient conforme à l'invention,
- les figures 2a et 2b représentent un détail de la figure 2,
- et la figure 3 illustre le contexte d'utilisation du récipient.

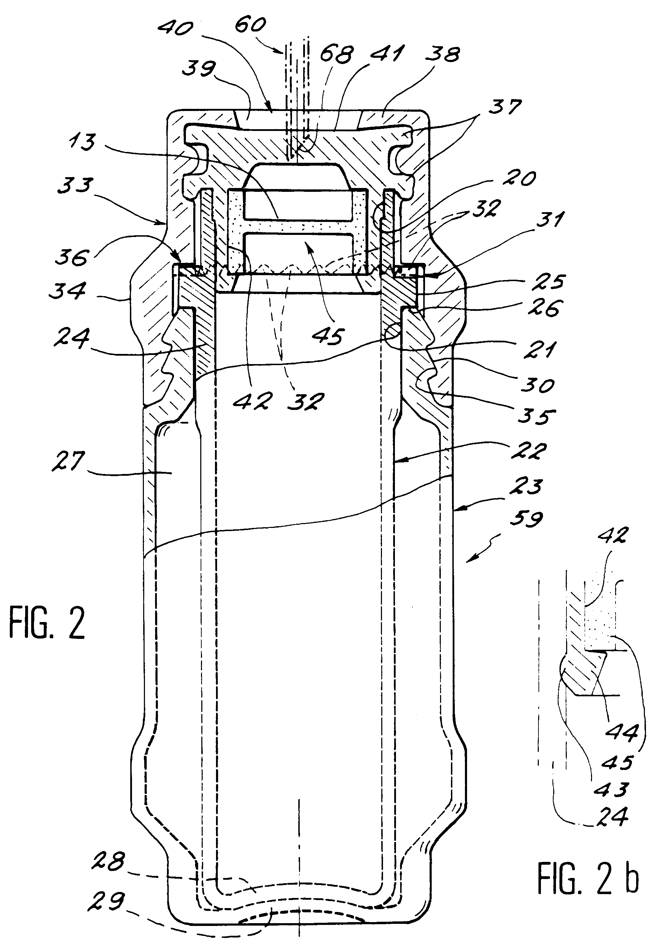

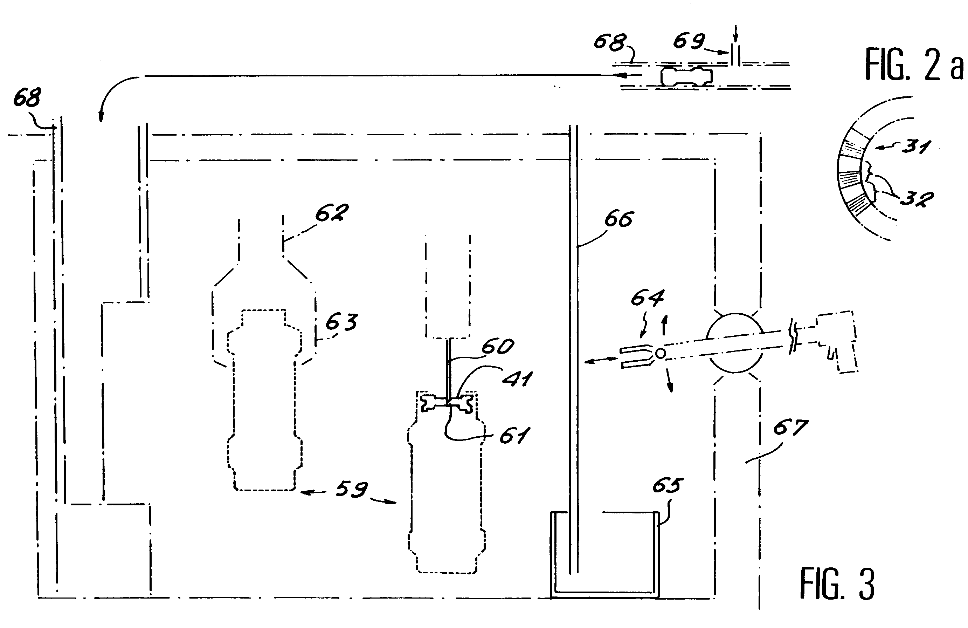

On passe à la figure 2. Alors que dans la réalisation précédente il était prévu que le flacon ou cruchon 1 et l'enveloppe ou curseur 2 étaient tête-bêche, c'est-à-dire avec des ouvertures opposées, ici l'ouverture 20 du cruchon 22 et l'ouverture 21 du curseur 23 sont du même côté. Le cruchon 22 est plus long que le curseur 23 et dépasse donc de son ouverture 21, à laquelle il est ajusté avec une grande précision, grâce à une portion renflée 24 qu'il porte à cet endroit et qui saille sur sa surface extérieure.

De plus, la portion renflée 24 est adjacente à une collerette 25 saillant encore plus à l'extérieur du cruchon 22 et qui est posée sur une portée 26 plane à l'extrémité de l'ouverture 21 du curseur 23. Le pourtour de jonction peut être collé ou soudé, scellant hermétiquement le volume vide 27 situé entre le cruchon 22 et le curseur 23, qui ne sera ainsi jamais pollué. De plus, le cruchon 22 et le curseur 23 possèdent des culots 28 et 29 concaves et emboîtés qui offrent un bon centrage à l'opposé des ouvertures 20 et 21 et achèvent de solidariser ces deux pièces.

L'ouverture 21 du curseur 23 porte un filetage 30 extérieur , et la collerette 25 porte une couronne dentée 31, formée d'une circonférence de dents 32 de section triangulaire de faible hauteur qui s'élèvent dans la direction de l'axe commun au cruchon 22 et au curseur 23. On la représente bien à la figure 2a en vue de dessus. Ce moyen peut aussi être établi sur le sommet du curseur 23.

L'opercule 33 correspond par sa fonction essentielle de fermeture du curseur 23 au capuchon 4 de la réalisation précédente, mais sa forme est complètement différente et il possède en particulier un rebord 34 à peu près cylindrique de grande hauteur portant un taraudage 35 à sa partie inférieure, une couronne dentée 36, semblable à celle 31 du cruchon 22, mais dont les dents 32 sont opposées, ainsi que des stries circulaires 37 et une surface supérieure d'extrémité plane 38 qui est percée par un trou 39. Quand l'opercule 33 est assemblé au reste du récipient, le taraudage 35 est engagé sur le filetage 30, les dents 32 des couronnes 31 et 36 sont imbriquées et s'opposent à tout desserrage accidentel, et le cruchon 22 est également clos. Un bouchon 40 d'élastomère est en effet encastré dans l'opercule 33 et donc totalement solidaire de lui. Il est pour cela composé d'une surface de piqûre 41 circulaire dont le bord est muni de collerettes comprimées dans les stries circulaires 37. La surface de piqûre 41 s'étend pour l'essentiel devant le trou 39 et est donc apparente de l'extérieur. Le bouchon 40 est encore composé d'une lèvre intérieure 42, de forme analogue à celle de l'art antérieur mais dont la surface extérieure, qui est destinée à se mouler sur la face intérieure de la paroi de l'ouverture 20, comporte une portion saillante 43 vers l'extérieur à l'extrémité inférieure (figure 2b), en face d'un renflement 44 interne destiné comme précédemment à retenir un ramasse-goutte 45 qui ne sera pas décrit de nouveau car il est exactement semblable à celui de la réalisation antérieure. On devine que quand le montage est effectué, la lèvre intérieure 42 est contractée à l'extrémité et maintient plus fermement le ramasse-goutte 45.

La surface de piqûre 41 est beaucoup plus épaisse que dans la réalisation antérieure où elle avait sensiblement la même épaisseur que le clapet 13 du ramasse-goutte 11 (ou 45). La surface de piqûre 41 peut être environ deux fois plus épaisse que le clapet du ramasse-goutte 45. Quand une aiguille 60 est extraite de la surface de piqûre 41, son biseau 61 a dans ces conditions une hauteur plus petite que l'épaisseur de la surface de piqûre 41, et l'ouverture frayée par l'aiguille 60 dans cette surface a alors la possibilité de se refermer à tout moment soit autour d'une partie continue de l'aiguille 60 au-dessus du biseau 61, soit sur elle-même quand l'aiguille 60 est presque retirée, ce qui empêche complètement le liquide retenu au bout de l'aiguille 60 de suinter hors de la surface de piqûre 41.

Bien que la jupe 9 de la réalisation précédente soit omise, le bouchon 40 assure l'étanchéité du cruchon 22 aux suintements des liquides et au vide grâce à la seule lèvre interne 42, et même beaucoup mieux si le cruchon 22 est fabriqué par moulage-injection de plastique autour d'un moule intérieur, car sa surface est plus régulière et plus lisse. Ses dimensions, et notamment son diamètre interne et son épaisseur, sont aussi plus régulières plus précises et plus reproductibles, ce qui rend les mesures par absorption de rayonnement à travers le cruchon 22 plus précises. Les parties du cruchon 22 et du curseur 23 autres que le bouchon 40 peuvent être réalisées en d'autres matériaux décontaminables et donc recyclables si nécessaire, tels que l'acier inoxydable, le Téflon et le verre, bien qu'il soient plus onéreux et que le verre soit de plus fragile, mais on ne peut pas les écarter absolument.

On a évoqué d'autres opérations que le perçage d'un récipient (référencé globalement par 59) par une aiguille 60 sur la figure 3 : selon le besoin, on peut ouvrir des récipients 59 ou les refermer en faisant saisir leur opercule 33 par les griffes 63 d'une visseuse-dévisseuse automatique 62. Un tel outil, qui peut être commandé de façon purement automatique, est préférable à une pince 64 à commande manuelle largement utilisée jusqu'à présent mais qui est incommode et qu'on voudrait délaisser autant que possible.

Le contenu des récipients 59 est transféré par l'aiguille 60 dans des cuves telles que 65, dont le contenu est ensuite analysé par des sondes 66 d'analyses appropriées. Tous ces dispositifs, ainsi que d'autres qui ne font pas non plus partie de l'invention puisqu'ils sont déjà utilisés dans l'installation actuelle, sont disposés dans une boîte d'analyse 67 hors de laquelle les opérateurs se trouvent et dont les pinces 64 traversent la paroi. Les récipients 59 sont introduits dans la boîte d'analyse 67 et en sont retirés par des canalisations 68 dans lesquelles les récipients 59 sont déplacés par des injecteurs d'air comprimé 69. Les canalisations 68 mènent à des installations de remplissage des récipients 59, de décharge ou à d'autres boîtes d'analyse.

On s'aperçoit bien, après ces brèves notations du contexte technique de l'invention, combien il est avantageux de disposer de récipients 59 qui peuvent être manipulés facilement et sans risque de fausse manoeuvre ou de salissures qui pourraient être dangereuses, et qu'il serait bien difficile de réparer par l'intermédiaire de télémanipulateurs ou de pinces qui n'autorisent que des actions limitées. Le récipient 59 de l'invention, formé de deux parties séparables au lieu de cinq (cruchon, bouchon, ramasse-goutte, curseur et capuchon) dans la réalisation de la figure 1, autorise un allègement sensible des procédures d'analyse et permet de les automatiser beaucoup plus facilement.

## Revendications

1. Récipient (59) composé d'un flacon (22) ouvert destiné à contenir un produit, d'un bouchon souple (40) fermant le flacon par une lèvre circulaire (42) se moulant sur l'ouverture du flacon et possédant une surface de piqûre (41) par une aiguille (60) devant l'ouverture du flacon, d'une enveloppe ouverte (23) entourant le flacon et destinée à coulisser dans une canalisation de transport (68), et d'un opercule (33) fermant l'enveloppe, caractérisé en ce que le bouchon (40) est encastré dans l'opercule (33) en permanence et l'opercule est vissé à l'enveloppe et interrompu (39) devant la surface de piqûre (41).

2. Récipient suivant la revendication 1, caractérisé en ce que le flacon (22) porte une collerette (25) posée sur l'ouverture de l'enveloppe et fixée (26) à l'enveloppe (23).

3. Récipient suivant l'une quelconque des revendications 1 ou 2, caractérisé en ce que l'opercule et soit le flacon, soit l'enveloppe portent un frein (31, 32, 36) au dévissage de l'opercule.

4. Récipient suivant la revendication 3, caractérisé en ce que le frein consiste en une couronne dentée (36) sur l'opercule et une autre couronne dentée (31) sur le flacon ou l'enveloppe, les dents (32) des couronnes étant imbriquées.

5. Récipient suivant l'une quelconque des revendications 1 à 4, caractérisé en ce que le flacon est en plastique obtenu par moulage.

6. Récipient suivant la revendication 5, caractérisé en ce que le moulage est un moulage à moule intérieur.

7. Récipient suivant l'une quelconque des revendications 1 à 6, dans lequel le bouchon porte un ramasse-goutte (45).

8. Récipient suivant la revendication 7, caractérisé en ce que la lèvre circulaire (42) comporte un renflement externe (43) situé au-delà du ramasse-goutte (45).

9. Récipient suivant l'une quelconque des revendications 7 ou 8, caractérisé en ce que la surface de piqûre (41) est plus épaisse que la longueur d'un biseau (61) d'une aiguille (60) venant piquer la surface de piqûre (41).

10. Récipient suivant l'une quelconque des revendications 1 à 9, caractérisé en ce que le flacon et l'enveloppe possèdent des culots (28, 29) emboîtés l'un dans l'autre.

## Claims

1. Receptacle (59) composed of an open flask (22) intended to contain a substance, a flexible stopper (40) closing the flask by means of a circular lip (42) moulded onto the opening of the flask and having a surface (41) pricked by a needle (60) in front of the opening of the flask, an open casing (23) surrounding the flask and intended to slide in a transport pipe (68), and an inner capsule (33) closing the casing, characterized in that the stopper (40) permanently embedded in the inner capsule (33), the latter being screwed to the casing and interrupted (39) in front of the pricking surface (41).

2. Receptacle according to claim 1, characterized in that the flask (22) bears a small ring (25) placed on the opening of the casing and fixed (26) to the casing (23).

3. Receptacle according to claim 1 or 2, characterized in that the inner capsule and either the flask or the casing bear a brake (31,32,36) for unscrewing the inner capsule.

4. Receptacle according to claim 3, characterized in that the brake consists of a toothed crown (36) on the inner capsule and another toothed crown (31) on the flask or the casing, the teeth (32) of the crowns being imbricated.

5. Receptacle according to any one of the claims 1 to 4, characterized in that the flask is plastic and is obtained by moulding.

6. Receptacle according to claim 5, characterized in that the moulding is a moulding with an internal mould.

7. Receptacle according to any one of the claims 1 to 6, characterized in that the stopper bears a drop catcher (45).

8. Receptacle according to claim 7, characterized in that the circular lip (42) comprises an external swelling (43) situated beyond the drop catcher (45).

9. Receptacle according to either of the claims 7 and 8, characterized in that the pricking surface (41) is thicker than the length of a sloping edge (61) of a needle (60) pricking the pricking surface (41).

10. Receptacle according to any one of the claims 1 to 9, characterized in that the flask and the casing have slugs (28,29) nested inside one another.

## Patentansprüche

1. Behälter (59), umfassend eine für das Enthalten eines Produkts bestimmte offene Flasche (22), einen nachgiebigen Stopfen (40), der die Flasche mittels einer sich an die Flaschenöffnung anschmiegenden Ringlippe (42) verschließt und vor der Flaschenöffnung eine Durchstechfläche (41) für eine Nadel (60) besitzt, eine die Flaschen umgegebende offene Hülle (23), dazu bestimmt, in einer Transportleitung (68) zu gleiten, und einen die Hülle verschließenden Deckel (33),
**dadurch gekennzeichnet**,
daß der Stopfen (40) in den Deckel (33) ohne Unterbrechung eingelassen bzw. eingefügt ist und der Deckel auf die Hülle geschraubt und vor der Durchstechfläche (41) unterbrochen ist (39).

2. Behälter nach Anspruch 1, dadurch gekennzeichnet, daß die Flasche (22) einen Kragen (25) aufweist, der auf der Hüllenöffnung aufliegt und an der Hülle (23) fixiert ist (26).

3. Behälter nach einem der Ansprüche 1 oder 2, dadurch gekennzeichnet, daß der Deckel und entweder die Flasche oder die Hülle eine Deckel-Aufschraubsicherung (31, 32, 36) umfassen.

4. Behälter nach Anspruch 3, dadurch gekennzeichnet, daß die Sicherung durch einen Zahnring (36) auf dem Deckel und einen weiteren Zahnring (31) auf der Flasche oder der Hülle gebildet wird, wobei die Zähne (32) der Ringe ineinandergreifen bzw. ineinander verschachtelt sind.

5. Behälter nach einem der Ansprüche 1 bis 4, dadurch gekennzeichnet, daß die Flasche aus Kunststoff ist, hergestellt durch Blasformen bzw. Preßspritzen.

6. Behälter nach Anspruch 5, dadurch gekennzeichnet, daß das Preßspritzen ein Formen mit Innenform ist.

7. Behälter,nach einem der Ansprüche 1 bis 6, bei dem der Stopfen einen Tropfensammler (45) umfaßt.

8. Behälter nach Anspruch 7, dadurch gekennzeichnet, daß die Ringlippe (42) einen Außenwulst (43) umfaßt, der sich jenseits des Tropfensammlers (45) befindet.

9. Behälter nach einem der Ansprüche 7 oder 8, dadurch gekennzeichnet, daß die Durchstechfläche (41) dicker ist als die Länge einer Anschrägung (61) einer die Durchstechfläche (41) durchstechenden Nadel (60).

10. Behälter nach einem der Ansprüche 1 bis 9, dadurch gekennzeichnet, daß die Flasche und die Hülle ineinandersteckende bzw. sich aneinanderschmiegende hohle Böden (28, 29) besitzen.
